# EUROPEAN PATENT SPECIFICATION

(11) **EP 3 972 346 B1**
(45) Date of publication and mention of the grant of the patent: **14.05.2025**
(21) Application number: 19941881.5
(22) Date of filing: 16.08.2019
(51) Int. Cl.: H04W 40/22, H04W 36/00, H04W 76/10

(54) **LINK SWITCHING METHOD AND COMMUNICATION DEVICE**
VERBINDUNGSUMSCHALTUNGSVERFAHREN UND KOMMUNIKATIONSVORRICHTUNG
PROCÉDÉ DE COMMUTATION DE LIAISON ET DISPOSITIF DE COMMUNICATION

(43) Date of publication of application: 23.03.2022
(73) Proprietor: GUANGDONG OPPO MOBILE TELECOMMUNICATIONS CORP., LTD., Dongguan, Guangdong 523860 (CN)
(72) Inventor: LIU, Jianhua, Dongguan, Guangdong 523860 (CN); LU, Qianxi, Dongguan, Guangdong 523860 (CN); YANG, Haorui, Dongguan, Guangdong 523860 (CN)
(74) Representative: Penza, Giancarlo
(86) International application number: PCT/CN2019/101196
(87) International publication number: WO 2021/031022

(56) References cited:
- WO-A1-2018/006253
- WO-A1-2018/102964
- WO-A1-2018/102964
- CN-A- 103 442 397
- CN-A- 106 162 779
- US-A1- 2016 066 289
- US-A1- 2019 141 771
- US-A1- 2019 320 357
- APPLE: "Summary of [104#56][NR/V2X] AS Level Link Management for Unicast", 3GPP DRAFT; R2-1901900, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 15 February 2019 (2019-02-15), pages 1 - 27, XP051603249

## Description

### Technical Field

Embodiments of the present application relate to the field of communication technologies, and more specifically, to a link switching method and communication device.

### Background

At present, in service transmission of terminal-to-terminal services or terminal-to-network services, if a link failure occurs, the terminal will inform an application layer, and the application layer will initiate reestablishment. However, this reestablishment process may have a relatively large latency, causing services to be interrupted for a relatively long time.

Related technologies are known from US2019141771A1, WO2018102964A1 and R2-1901900.

### Summary

The invention is set out in the appended set of claims. Embodiments of present application provide a link switching method and a communication device, which are conducive to reducing latency in recovering of service transmission. It should be noted that embodiments of the invention are those whose scope is within that of the appended claims, and the implementations disclosed in this disclosure which do not fall under the scope of the appended claims are to be considered as examples for illustration.

According to the above technical solution, if service transmission cannot be performed by using a first link currently used between two communication devices, a second link between the two devices may be established, and the newly established second link is used for performing the service transmission, which is conducive to reducing latency in recovering of the service transmission.

These aspects or other aspects of the present application will be more easily understood from the following description of the embodiments.

### Brief Description of Drawings

FIG. 1 is a schematic diagram of an architecture of a communication system according to an embodiment of the present application.
FIG. 2 is a schematic diagram of an architecture of a communication system according to an embodiment of the present application.
FIG. 3 is a schematic diagram of an architecture of a communication system according to an embodiment of the present application.
FIG. 4 is a schematic block diagram of a link switching method according to an embodiment of the present application.
FIG. 5 is a schematic block diagram of a link switching method according to an embodiment of the present application.
FIG. 6 is a schematic block diagram of a link switching method according to a claimed embodiment of the present application.
FIG. 7 is a schematic block diagram of a communication system in accordance with an embodiment of the present application.
FIG. 8 is a schematic block diagram of a communication system in accordance with an embodiment of the present application.
FIG. 9 is a schematic block diagram of a chip according to an embodiment of the present application.

### Detailed Description

Technical solutions in embodiments of the present application will be described below with reference to accompanying drawings in the embodiments of the present application.

It should be understood that the technical solutions of the embodiments of the present application are applicable to various communication systems, such as, a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, a LTE Frequency Division Duplex (FDD) system, a LTE Time Division Duplex (TDD) system , a Universal Mobile Telecommunication System (UMTS), a Worldwide Interoperability for Microwave Access (WiMAX) communication system, New Radio (NR), or future 5G System, etc.

In particular, the technical solutions of the embodiments of the present application are applicable to various communication systems based on non-orthogonal multiple access technology, such as a Sparse Code Multiple Access (SCMA) system, and a Low Density Signature (LDS) system, etc. Of course, the SCMA system and the LDS system may also be referred to as other names in the communication field. Further, the technical solutions of the embodiments of the present application are applicable to a multicarrier transmission system employing non-orthogonal multiple access technology, such as an Orthogonal Frequency Division Multiplexing (OFDM) system, a Filter Bank Multi-Carrier (FBMC) system, a Generalized Frequency Division Multiplexing (GFDM) system, a Filtered-OFDM (F-OFDM) system, or the like using the non-orthogonal multiple access technology
With the continuous development of 5G applications, direct communication service between devices has been introduced into the Standard as a new service form for related standardized services.

The communication service between devices is mainly aimed at applications such as Augmented Reality (AR)/Virtual Reality (VR), games, etc., and has high requirements on service qualities such as speed, latency, packet loss rate and high-speed codec. For example, the rate of 10Gbps should be reached for VR games, and the packet loss rate should not exceed 10E-4. In view of a session established by a direct communication service between devices, UEs of a session of the direct communication service between same devices may be considered to form a service application group, for example, a team in a game.

There are the following possible communication modes among terminals in the group, which may be used in combination:
- Close to each other, for example, using Device-to-Device (D2D) technology for broadcasting or multicast, or establishing a sidelink (also referred to as using a PC5 interface) for 1-to-1 communication (unicast);
- Remote to each other, for example, using a UE- network-server-peer network-peer UE (also referred to as using a Uu interface).

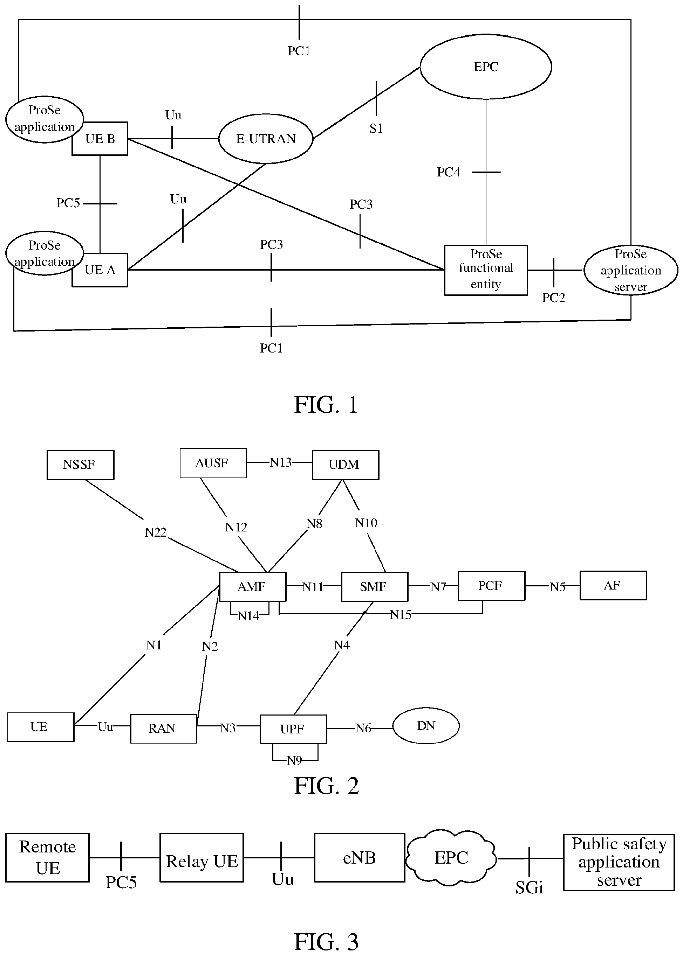

The communication architecture of the D2D technology is shown in FIG. 1. D2D services are also referred to as Proximity-based Services (ProSe). As shown in FIG. 1, in a D2D communication architecture, because a UEA and a UEB provide related ProSe applications, their interfaces connected with a ProSe application server are PC1 interfaces, and an interface between the UE A and the UE B is a PC5, which is used for direct communication between UEs. The UE A and the UE B are connected with a ProSe functional entity through PC3 interfaces respectively, an interface between the ProSe functional entity and existing EPC is a PC4, and the interface between the ProSe functional entity and the ProSe application server is a PC2. In an Evolved Packet System (EPS), the entire EPS includes an Evolved Universal Terrestrial Radio Access Network (E-UTRAN) and an Evolved PacketCore Networking (EPC), wherein the EPC includes a Home Subscriber Server (HSS), a Mobility Management Entity (MME), a Serving GPRS Support Node (SGSN), a Policy and Charging Rule Function (PCRF), a Serving Gateway (S-GW), a Packet Data Gateway (P-GW) and a Packet Data Network (PDN). The interface between the E-UTRAN and the EPC is an S1 interface, and the UE A and the UE B are connected with the E-UTRAN through LTE-Uu interfaces respectively.

In such communication architecture, services between terminals may communicate directly through a PC5 interface, or the services of the terminals may be sent to the application server through Uu interfaces, and then the application server sends the services to a terminal of an opposite end.

For communication between a terminal and a network, the terminal may directly send a service to the network, and their communication architecture is shown in FIG. 2. The service may also be sent to the network by a relay, and their communication architecture is shown in FIG. 3.

As shown in FIG. 2, the communication system may include an Access and Mobility Management Function (AMF), a Session Management Function (SMF), and a Policy Control Function (PCF), an Application Function (AF), a User Equipment (UE) (wherein the UE may also be referred to as a terminal device), an Access Network (an or Radio Access Network), RAN), a User Plane Function (UPF), a Data Network (DN), a Network Slice Selection Function (NSSF), an Authentication Server Function (AUSF) and a Unified Data Management (UDM).

Among them, the AMF is responsible for mobility management and is connected with the UE and the AN or the RAN. The SMF is responsible for session management and is connected with the UPF or the UDM. The PCF is responsible for policy control and may be connected with the SMF, the AF and the AMF. The UDM is responsible for subscription data management.

There may be different interfaces between devices, for example, N1 is an interface connecting a UE and the AMF, N2 is an interface connecting the AMF and the AN or RAN, N3 is an interface connecting the AN or RAN and the UPF, N4 is an interface connecting the SMF and the UPF, N5 is an interface connecting the PCF and the AF, N6 is an interface connecting the UPF and the DN, N7 is an interface connecting the SMF and the PCF, N8 is an interface connecting the AMF and the UDM, N9 is an interface connecting UPFs, N10 is an interface connecting UDM and SMF, N11 is an interface connecting the AMF and the SMF, N12 is an interface connecting the AUSF and the AMF, N13 is an interface connecting the AUSF and the UDM, N14 is an interface connecting AMFs, N15 is an interface connecting the AMF and the PCF, N22 is an interface connecting the NSSF and the AMF, and Uu interface is an interface connecting the UE and the AN or RAN.

As shown in FIG. 3, a remote UE communicates with an eNB through a relay UE, herein the relay UE is also referred to as a ProSe UE-to-network relay. The relay UE may be connected to the eNB through a Uu interface, and the remote UE may be connected to the relay UE through a PC5 interface. Compared with the network, the relay UE may be within a coverage range and the remote UE may be outside the coverage range. The eNB is a part of the EPC, and the eNB may be connected to a public safety application server through a SGi interface.

Optionally, network devices in the foregoing various communication architectures may be devices that communicates with terminal devices (or referred to as communication terminals or terminals). A network device may provide communication coverage for a specific geographical area, and may communicate with terminal devices located within the coverage area. Optionally, the network device may be a Base Transceiver Station (BTS) in a GSM system or a CDMA system, or a NodeB (NB) in a WCDMA system, or an Evolutional Node B (eNB or eNodeB) in an LTE system, or a radio controller in a Cloud Radio Access Network (CRAN), or the network device may be a mobile handover center, a relay station, an access point, a vehicle-mounted device, a wearable device, a hub, a switch, a bridge, a router, a network side device (gNB) in a 5G network, or a network device in a future evolved Public Land Mobile Network (PLMN), etc.

Optionally, the terminal devices in each of the above-mentioned communication architectures include, but are not limited to, User Equipment (UE), an access terminal, a user unit, a user station, a mobile site, a mobile station, a remote station, a remote terminal, a mobile device, a user terminal, a terminal, a wireless communications device, a user agent, or a user apparatus. The access terminal may be a cellular phone, a cordless phone, a session initiation protocol (SIP) phone, a wireless local loop (WLL) station, a personal digital assistant (PDA), a handheld device with a wireless communication function, a computing device or another processing device connected to a wireless modem, an on-board device, a wearable device, a terminal device in a future 5G network, or a terminal device in a future evolved Public Land Mobile Network (PLMN), etc., which is not limited in the embodiments of the present invention.

Optionally, the 5G system or the 5G network may also be referred to as a New Radio (NR) system or an NR network.

It should be understood that the terms "system" and "network" are often used interchangeably herein. The term "and/or" herein refers to an association relation describing associated objects only, which indicates that three relations may exist, for example, A and/or B may indicate three cases: A alone, both A and B, and B alone. In addition, the symbol "/" herein generally indicates that objects before and after the symbol "/" have an "or" relation.

At present, in service transmission of terminal-to-terminal services or terminal-to-network services, if a link failure occurs, the terminal will inform an application layer, and the application layer will initiate an reestablishment. However, this reestablishment process may have a relatively large latency, causing services to be interrupted for a relatively long time.

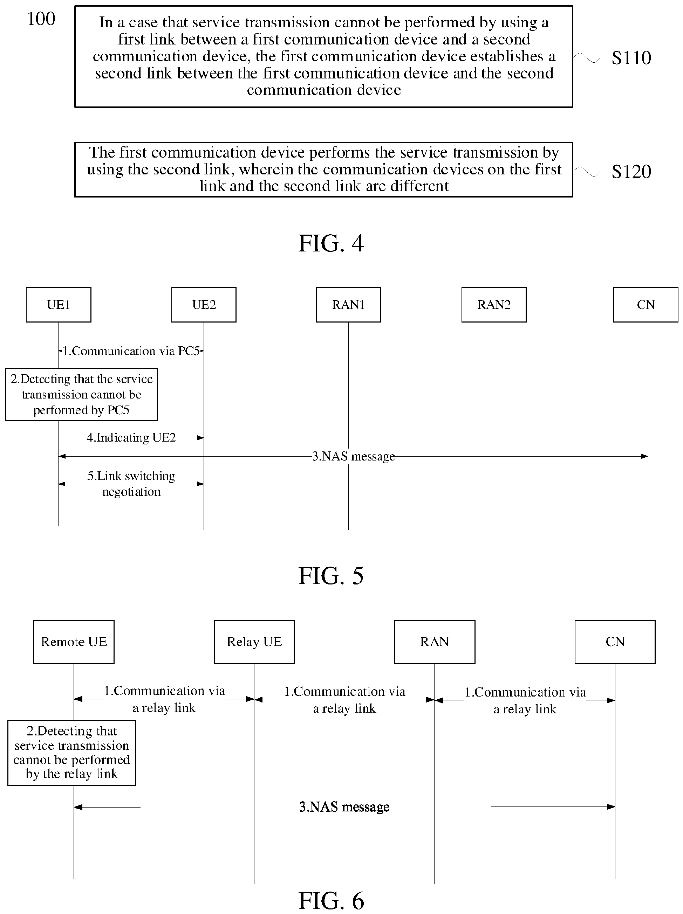

FIG. 4 is a schematic block diagram of a link switching method 100 according to an embodiment of the present application. As shown in FIG. 4, the method includes some or all of the following contents.

S110, in a case that service transmission cannot be performed by using a first link between a first communication device and a second communication device, the first communication device establishes a second link between the first communication device and the second communication device.

S120, the first communication device performs the service transmission by using the second link, herein the communication devices on the first link and the second link are different.

As can be seen from the above description, a terminal may have two links for selection during a communication with a terminal or during communication with a network respectively. In an embodiment of the present application, if the service transmission cannot be performed by the current first link for the communication, the terminal may re-establish another new link, i.e., the second link, and use the second link for the communication.

Optionally, the method of an embodiment of the present application may be applied to a terminal-to-terminal communication, that is, the first communication device is a terminal device and the second communication device is a terminal device. It may also be applied to a terminal-to-network communication, that is, the first communication device is a terminal device and the second communication device is a network device, herein the communication devices on the first link and the second link are different. The failure of the transmission service by the first link may be considered as a certain communication device not good on the first link. The second link may be established by replacing or deleting the certain communication device, and then the second link may be used for communication.

Hereinafter, the technical solutions of the present application will be described in detail by taking a terminal-to-terminal service and a terminal-to-network service as examples respectively.

Terminal-to-terminal service: a first link may be a direct link (i.e., using a PC5 interface) and communication devices on the first link only include a first terminal device and a second terminal device; a second link is a first access link (i.e., using a Uu interface) and communication devices on the second link include a network device besides the first terminal device and the second terminal device; or, the first link may be a first access link (i.e., using a Uu interface) and communication devices on the first link include a network device besides a first terminal device and a second terminal device, while the second link is a direct link (i.e., using a PC5 interface) and the communication devices on the second link only include the first terminal device and the second terminal device.

FIG. 5 shows a schematic diagram of switching of a terminal-terminal service between a direct link and a access link according to an embodiment of the present application. As shown in FIG. 5, in Act 1, a UE 1 and a UE 2 are communicating through a direct link. In Act 2, the UE 1 may detect that the direct link has failed or is about to fail, in other words, service transmission cannot be performed by the direct link. In Act 3, the UE 1 may establish an access link connection, that is, it may send a Non-Access Stratum (NAS) message to a Core Network (CN), herein the NAS message may include a service request or a Protocol Data Unit (PDU) session establishment request. Optionally, in Act 4, the UE 1 may notify the UE 2, that is, send indication information to the UE 2, a main function of the indication information is to enable the UE 2 to start establishing an access link as well. Specifically, the indication information may be at least one of the following information: the direct link has failed or is about to fail, the service link will or has been switched to the access link, and the direct link will or has been released. An embodiment of the present application does not limit the specific content of the indication information. In Act 5, the UE 1 and the UE 2 may perform negotiation of the link switching, and then the UE 1 may perform transmission of the terminal-to-terminal service with the UE 2 through the access link.

Optionally, the detection of the direct link may also be performed by the UE 2, that is, the UE 2 actively detects the direct link, and sends the indication information for starting the establishment of the access link to the UE 1 when the service transmission cannot be performed by the direct link. Furthermore, the UE 1 starts to establish the connection of the access link, and uses the access link to perform the transmission of the terminal-to-terminal service after performing the negotiation of the link switching with the UE 2.

Optionally, the UE 2 may also perform acts similar to those of the UE 1 until the communication between terminals is switched from the direct link to the access link. Regardless which terminal of the UE 1 or the UE 2 first detects that the service transmission cannot be performed by the direct link, it may indicate to the opposite terminal, for example, to indicate by a PC5-S Signaling or a PC5-Radio Resource Control (RRC) Signaling. After receiving the indication information, the opposite terminal may also start to establish the connection of the access link.

A negotiation process of link switching between the UE 1 and the UE 2 may include:
In a possible embodiment, in a case that the UE 1 completes the establishment of the access link first, the UE1 may send indication information to a UE 2, indicating the UE 2 to end sending and receiving data on the direct link, and/or indicating the UE 2 to send and receive data on the access link. After receiving the indication information, the UE 2 may directly not send the data to the UE 1 through the direct link, nor receive the data from the UE 1 through the direct link. Furthermore, after receiving the indication information to end sending or receiving data on the direct link, the UE 2 may further determine whether the access link of the UE 2 has been established at this time. If the access link has been established, the UE 2 may directly send the data to the UE 1 without the direct link and receive the data from the UE 1 without the direct link. Instead, the UE2 sends the data to and receives the data from the UE 1 through the access link. While if the establishment is not completed, the UE 2 may reply to the UE 1 to continue using the direct link. Optionally, the UE 2 may choose to continue to establish the access link at this time, or may stop establishing the access link. If the access link of the UE 2 is established successfully, the UE 1 may be informed to switch to the access link. Optionally, the indication information may also carry timer information, if the timer expires, the UE 2 will end receiving and sending the data on the direct link. Or, if the timer expires, the UE 2 may send and receive the data on the access link. Or, the timer may be used when the UE 2 has not completed the establishment of the access link, if the timer expires, the access link will no longer be established, and if the timer does not expire, the establishment is continued. Optionally, the timer may be started when the UE 2 receives the indication information carrying the timer information or when response information of the indication information is returned to the UE 1.

In another alternative embodiment, in a case that a UE 2 completes the establishment of the access link first, it may send indication information to a UE 1, indicating the UE 1 to end sending and receiving data on the direct link, and/or indicating the UE 1 to send and receive data on the access link. After receiving the indication information, the UE 1 may directly not send the data to the UE 2 through the direct link, nor receive the data from the UE 2 through the direct link. Furthermore, after receiving the indication information to end sending or receiving the data on the direct link, the UE 1 may further determine whether the access link of the UE 1 has been established at this time. If the access link has been established, the UE 1 may directly send the data to the UE 2 without the direct link and receive the data of the UE 2 without the direct link. Instead, the UE1 sends the data to the UE 2 through the access link and receives the data of the UE 2 through the access link. While if the establishment is not completed, the UE 1 may reply to the UE 2 to continue using the direct link. Optionally, the UE 1 may choose to continue to establish the access link at this time, or may stop establishing the access link. If the access link of the UE 1 is established successfully, the UE 2 may be informed to switch to the access link. Optionally, the indication information may also carry timer information, and the UE 1 will end receiving and sending the data on the direct link if the timer expires. Or, if the timer expires, the UE 1 may send and receive the data on the access link. Or, the timer may be used when the UE 1 has not completed the establishment of the access link, if the timer expires, the access link is no longer established, and if the timer does not expire, the establishment is continued. Optionally, the timer may be started when the UE 1 receives the indication information carrying the timer information or when response information of the indication information is returned to the UE 2.

Optionally, as long as the UE 1 or the UE 2 completes the establishment of the access link, it may send the indication information to the opposite terminal.

Optionally, the indication information for ending sending or receiving the data on the direct link may also be indicated by a PC5-S Signaling or a PC5-Radio Resource Control (RRC) Signaling.

In another alternative embodiment, when the access link of the UE 1 is established, the data may be sent to the UE 2 through the access link. When receiving the data of the UE 1 on the access link, the UE2 uses the access link to send data. In other words, when the UE 2 receives the data of the UE 1 on the access link, the UE2 uses the access link for performing service transmission. Specifically, an application layer of the UE 2 receives the data from the UE 1, and the application layer of UE 2 notifies a lower layer, such as a PC5 layer or an RRC layer. Similarly, when the access link of the UE 2 is established, data may be sent to the UE 1 through the access link. When the UE 1 receives data of the UE 2 on the access link, the UE1 uses the access link to send data. In other words, when the UE 1 receives data of the UE 2 on the access link, the UE2 uses the access link for performing service transmission.

Optionally, if the UE 1 or the UE 2 determines that the service transmission cannot be performed by the direct link, it may determine whether link quality of the direct link meets a preset condition. For example, it may be determined based on criteria of network configuration whether the service transmission can be performed by the direct link. Specifically, it may be determined based on a threshold of the link quality configured by the network, for example, a measured value of the link quality of the direct link is less than a threshold value. Or, it may be determined based on a specific application, Quality of Service (QoS) or PDU session, for example, whether it is less than a threshold value in the specific application, QoS or PDU session, herein the specific application, QoS or PDU session may be related to a service to be transmitted.

It should be noted that the above description takes switching a direct link to a access link as an example, but an embodiment of the present application is also applicable to switching a access link to a direct link. Specifically, if the UE 1 or the UE 2 detects that the access link between the networks cannot be used for performing service transmission, it may establish a direct link and use the direct link for performing the service transmission. Further, the UE 1 or the UE 2 may indicate to an opposite terminal that the service transmission cannot be performed by the access link, or may also indicate the opposite terminal to end sending or receiving data on the access link. The detailed description of this solution may refer to the above, and details will not be repeated here for brevity.

It should be understood that FIG. 5 shows an example in which an RAN1 serves a UE1 and an RAN2 serves a UE2, and the UE1 and the UE2 may be served by the same RAN.

Terminal-network service: a first link is a relay link and communication devices on the first link include a remote terminal device, a network device and a relay terminal device, while a second link is a second access link and communication devices on the second link include the remote terminal device and the network device. Alternatively, a first link is a second access link and communication devices on the first link includes a remote terminal device and a network device, while a second link is a relay link and communication devices on the second link include the remote terminal device, the network device and a relay terminal device.

FIG. 6 shows a schematic diagram of switching of a terminal-network service between a relay link and an access link according to a claimed embodiment of the present application. As shown in FIG. 6, in Act 1, a UE 1 and a UE 2 are communicating through a relay link. In Act 2, the UE 1 may detect that the relay link has failed or is about to fail, in other words, the service transmission cannot be performed by the relay link. In Act 3, the UE 1 may establish an access link connection, that is, may send a Non-Access Stratum (NAS) message to a Core Network (CN), herein the NAS message may include a service request or a Protocol Data Unit (PDU) session establishment request.

Optionally, in an embodiment of the present application, the relay link mainly includes the use of the PC5 interface and the use of the Uu interface shown in FIG. 3. The remote UE may detect by itself that the direct link between itself and the relay UE has failed or is about to fail, that is, the service transmission cannot be performed, and the remote UE may consider that the service transmission cannot be performed by the relay link between itself and the network device (RAN), and then it may initiate the establishment of the access link to the CN. Or, the relay UE may detect that the service transmission cannot be performed by the direct link between the relay UE and the remote UE, and/or the service transmission cannot be performed by the access link between the relay UE and the network device (RAN), the relay UE may indicate to the remote UE that the relay link cannot transmit services, and then the remote UE may initiate the establishment of the access link to the CN.

Similarly, the way of determining that the service transmission cannot be performed by a relay link is similar to the way of determining that the service transmission cannot be performed by the direct link as described above, and details will not be repeated here.

When the remote UE initiates a connection establishment request of a access link, it may use the access link for performing service transmission after the establishment is completed. Further, the remote UE may also notify a network side to delete the connection of a relay link, or notify the relay UE to initiate a release request of the relay link. Optionally, the relay UE may also actively initiate a release request of a relay link.

It should be noted that the above description takes switching a relay link to a access link as an example, but an embodiment of the present application is also applicable to switching a access link to a relay link, which is not limited in the embodiments of the present application.

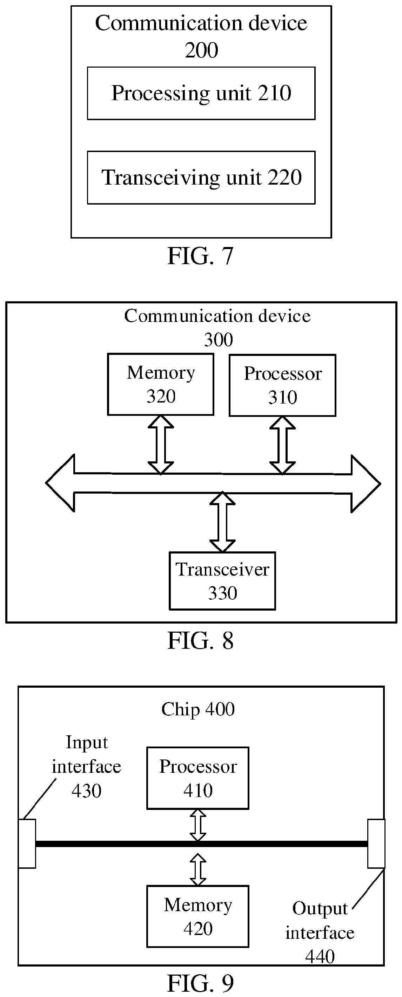

FIG. 7 is a schematic block diagram of a communication device 200 according to an embodiment of the present application. As shown in FIG. 7, the communication device 200 is a first communication device and the communication device 400 includes a processing unit 210 and a transceiving unit 220.

The processing unit 210 is configured to establish a second link between a first communication device and a second communication device in a case that service transmission cannot be performed by using a first link between the first communication device and the second communication device.

The transceiving unit 220 is configured to perform the service transmission by using the second link, herein the communication devices on the first link and the second link are different.

Optionally, in an embodiment of the present application, when both the first communication device and the second communication device are terminal devices, the first link is a direct link and communication devices on the first link include the first communication device and the second communication device, and the second link is a first access link and communication devices on the second link include the first communication device, the second communication device and a network device. Or, when both the first communication device and the second communication device are terminal devices, the first link is a first access link and communication devices on the first link include the first communication device, the second communication device and a network device, and the second link is a direct link and communication devices on the second link include the first communication device and the second communication device.

Optionally, in an embodiment of the present application, the transceiving unit is further configured to send first indication information to the second communication device in the case that the service transmission cannot be performed by using the first link, herein the first indication information is used for indicating the second communication device to establish the second link.

Optionally, in an embodiment of the present application, the transceiving unit is further configured to receive the first indication information sent by the second communication device, in the case that the service transmission cannot be performed by using the first link, herein the processing unit is specifically configured to establish the second link in response to the first indication information.

Optionally, in an embodiment of the present application, the transceiving unit is further configured to send second indication information to the second communication device in a case that the first communication device has completed the establishment of the second link, herein the second indication information is used for indicating the second communication device to end sending and receiving data on the first link, and/or the second indication information is used for indicating the second communication device to send and receive the data on the second link.

Optionally, in an embodiment of the present application, the transceiving unit is further configured to receive the second indication information sent by the second communication device, herein the second indication information is used for indicating the first communication device to end sending and receiving data on the first link, and/or the second indication information is used for indicating the second communication device to send and receive the data on the second link; and the transceiving unit is specifically configured to perform the service transmission by using the second link in response to the second indication information.

Optionally, in an embodiment of the present application, the second indication information is used for indicating to end sending and receiving data on the first link in a case that a first timer expires, and/or, the second indication information is used for indicating to send and receive data on the second link in the case that the first timer expires.

Optionally, in an embodiment of the present application, the first timer is started when the second indication information is received or when response information of the second indication information is sent.

Optionally, in an embodiment of the present application, the transceiving unit is specifically configured to perform the service transmission by using the second link in response to the data received on the second link.

Optionally, in an embodiment of the present application, when the first communication device is a terminal device and the second communication device is a network device, the first link is a relay link and communication devices on the first link include the first communication device, the second communication device and a relay device, and the second link is a second access link and communication devices on the second link include the first communication device and the second communication device; or, when the first communication device is a terminal device and the second communication device is a network device, the first link is a second access link and communication devices on the first link include the first communication device and the second communication device, and the second link is a relay link and communication devices on the second link include the first communication device, the second communication device and a relay device.

Optionally, in an embodiment of the present application, the transceiving unit is further configured to receive third indication information sent by the relay device, herein the third indication information is used for indicating that the service transmission cannot be performed by the relay link.

Optionally, in an embodiment of the present application, the transceiving unit is further configured to notify the network device to delete a relay link in the case that the first communication device performs the service transmission by using the second link; or indicate the relay device to send a release request of the relay link to the network device in the case that the first communication device performs the service transmission by using the second link.

Optionally, in an embodiment of the present application, the processing unit is further configured to determine that the service transmission cannot be performed by the first link in a case that the link quality of the first link is sufficient low to meet a first condition.

Optionally, in an embodiment of the present application, the processing unit is specifically configured to determine that the service transmission cannot be performed by the first link if a measured value of the link quality of the first link is less than a first threshold.

Optionally, in an embodiment of the present application, the first threshold is configured by the network side or determined based on an application corresponding to the service to be transmitted, Quality of Service (QoS), or requirements in a Protocol Data Unit (PDU) session.

It should be understood that the communication device 200 according to the embodiment of the present application may correspond to the first communication device in the method embodiments of the present application, and the above-mentioned and other operations and/or functions of various units in the communication device 200 are respectively for implementing the corresponding processes of the terminal device in the method shown in FIG. 4, which will not be repeated here for the sake of brevity.

FIG. 8 is a schematic diagram of a structure of a communication device 300 according to an embodiment of the present application. The communication device 300 shown in FIG. 8 includes a processor 310, herein the processor 310 may call and run a computer program from a memory to implement a method in an embodiment of the present application.

Optionally, as shown in FIG. 8, the communication device 300 may further include a memory 320. Herein, the processor 310 may call and run a computer program from the memory 320 to implement a method in an embodiment of the present application.

Herein, the memory 320 may be a separate device independent of the processor 310, or may be integrated in the processor 310.

Optionally, as shown in FIG. 8, the communication device 300 may further include a transceiver 330, and the processor 310 may control the transceiver 330 to communicate with another device. Specifically, the transceiver 730 may send information or data to another device or receive information or data sent by another device.

Herein, the transceiver 330 may include a transmitter and a receiver. The transceiver 330 may further include antennas, a quantity of which may be one or more.

Optionally, the communication device 300 may specifically be the network device according to the embodiments of the present application, and the communication device 300 may implement the corresponding processes implemented by the network device in various methods in the embodiments of the present application, which will not be repeated here for brevity.

Optionally, the communication device 300 may be specifically the terminal device according to the embodiments of the present application, and the communication device 300 may implement the corresponding processes implemented by the terminal device in various methods in the embodiments of the present application, which will not be repeated here again for brevity.

FIG. 9 is a schematic diagram of structure of a chip according to an embodiment of the present application. A chip 400 shown in FIG. 9 includes a processor 410 that may call and run a computer program from a memory to implement a method in an embodiment of the present application.

Optionally, as shown in FIG. 9, the chip 400 may further include a memory 420. Herein, the processor 410 may call and run a computer program from the memory 420 to implement a method in an embodiment of the present application.

Herein, the memory 420 may be a separate device independent of the processor 410, or may be integrated in the processor 410.

Optionally, the chip 400 may further include an input interface 430. Herein, the processor 410 may control the input interface 430 to communicate with another device or chip. Specifically, the processor 410 may acquire information or data sent by another device or chip.

Optionally, the chip 400 may further include an output interface 440. Herein, the processor 410 may control the output interface 440 to communicate with another device or chip. Specifically, the processor 410 may output information or data to another device or chip.

Optionally, the chip may be applied to a communication device of an embodiment of the present application, and the chip may implement corresponding processes implemented by the first communication device in various methods of the embodiments of the present application, which will not be repeated here for brevity.

It should be understood that the chip mentioned in the embodiments of the present application may also be referred to as a system-level chip, a system chip, a chip system, or a system on chip, etc.

It should be understood that the processor in the embodiments of the present application may be an integrated circuit chip with a capability for processing signals. In an implementation process, various acts of the method embodiments described above may be completed through an integrated logic circuit of hardware in a processor or instructions in a form of software. The above processor may be a general purpose processor, a Digital Signal Processor (DSP), an Application Specific Integrated Circuit (ASIC), a Field Programmable Gate Array (FPGA), or another programmable logic device, a discrete gate or a transistor logic device, or a discrete hardware component. The processor may implement various methods, acts, and logic block diagrams disclosed in the embodiments of the present application. The general purpose processor may be a microprocessor or the processor may be any conventional processor or the like. The acts of the methods disclosed in connection with the embodiments of the present application may be directly embodied by execution of a hardware decoding processor, or by execution of a combination of hardware and software modules in a decoding processor. The software modules may be located in a storage medium mature in the field, such as a Random Access Memory, a flash memory, a Read-Only Memory, a Programmable Read-Only Memory, or an electrically erasable programmable memory, or a register. The storage medium is located in a memory, and a processor reads information in the memory and completes the acts of the above methods in combination with its hardware.

It should be understood that the memory in the embodiments of the present application may be a transitory memory or a non-transitory memory, or may include both transitory and non-transitory memory. The non-transitory memory may be a Read-Only Memory (ROM), a Programmable ROM (PROM), an Erasable PROM (EPROM), an Electrically EPROM (EEPROM), or a flash memory. The transitory memory may be a Random Access Memory (RAM) which serves as an external cache. As an example, but not as a limitation, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

It should be understood that, the foregoing memories are examples for illustration and should not be construed as limitations. For example, the memory in the embodiments of the present application may be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch link DRAM (SLDRAM), a Direct Rambus RAM (DR RAM), or the like. That is, the memories in the embodiments of the present application are intended to include, but are not limited to, these and any other suitable types of memories.

An embodiment of the present application further provides a computer readable storage medium, configured to store a computer program.

Optionally, the computer readable storage medium may be applied to a network device in an embodiment of the present application, and the computer program enables a computer to perform the corresponding processes implemented by the network device in various methods according to the embodiments of the present application, which will not be repeated here for brevity.

Optionally, the computer readable storage medium may be applied to a terminal device in an embodiment of the present application, and the computer program enables a computer to perform the corresponding processes implemented by the terminal device in various methods of the embodiments of the present application, which will not be repeated here for brevity.

An embodiment of the present application further provides a computer program product, including computer program instructions.

Optionally, the computer program product may be applied to a network device in an embodiment of the present application, and the computer program instructions enable a computer to perform the corresponding processes implemented by the network device in various methods according to the embodiments of the present application, which will not be repeated here for brevity.

Optionally, the computer program product may be applied to a terminal device in an embodiment of the present application, and the computer program instructions enables a computer to perform the corresponding processes implemented by the terminal device in various methods of the embodiments of the present application, which will not be repeated here for brevity.

An embodiment of the present application further provides a computer program.

Optionally, the computer program may be applied to a network device in an embodiment of the present application. When the computer program is run on a computer, the computer is enabled to perform the corresponding processes implemented by the network device in various methods according to the embodiments of the present application, which will not be repeated here for brevity.

Optionally, the computer program may be applied to a terminal device in an embodiment of the present application, and when the computer program is run on a computer, the computer is enabled to perform the corresponding processes implemented by the terminal device in various methods according to the embodiments of the present application, which will not be repeated here again for brevity.

Those of ordinary skills in the art will recognize that units and algorithm acts of various examples described in connection with the embodiments disclosed herein may be implemented in electronic hardware, or a combination of computer software and electronic hardware. Whether these functions are implemented in a form of hardware or software depends on a specific application and a design constraint of a technical solution. Those skilled in the art may use different methods to implement the described functions for each specific application, but such implementation should not be considered to be beyond the scope of the present application.

Those skilled in the art may clearly understand that for convenience and conciseness of description, specific working processes of the systems, apparatuses, and units described above may refer to the corresponding processes in the aforementioned method embodiments, and details will not be repeated here.

In several embodiments provided by the present application, it should be understood that the disclosed systems, apparatuses and methods may be implemented in other ways. For example, the apparatus embodiments described above are only illustrative, for another example, a division of the units is only a division of logical functions, and there may be other division manners in actual implementations. For example, multiple units or components may be combined or integrated into another system, or some features may be ignored or not executed. In addition, mutual coupling or direct coupling or communication connection shown or discussed may be indirect coupling or communication connection through some interfaces, apparatuses, or units, and may be in electrical, mechanical, or in other forms.

The units described as separated components may or may not be physically separated, and components shown as units may or may not be physical units, i.e., they may be located in one place or may be distributed over multiple network units. Some or all of the units may be selected according to practical needs to achieve the purpose of solutions of the embodiments.

In addition, various functional units in various embodiments of the present application may be integrated in one processing unit, or various units may be physically present separately, or two or more units may be integrated in one unit.

The functions may be stored in a computer readable storage medium if implemented in a form of a software functional unit and sold or used as a separate product. Based on such understanding, technical solutions of the present application, in essence, or a part contributing to the existing art, or part of the technical solutions, may be embodied in a form of a software product stored in a storage medium, including several instructions for enabling a computer device (which may be a personal computer, a server, or a network device, etc.) to perform all or part of the acts of the methods described in various embodiments of the present application. The aforementioned storage medium includes: various media, such as a U disk, a mobile hard disk, a Read-Only Memory (ROM), a Random Access Memory (RAM), a magnetic disk, or an optical disk, etc., which may store program codes.

The foregoing are merely specific embodiments of the present application, but the protection scope of the present application is not limited thereto. Any person skilled in the art may readily conceive variations or substitutions within the technical scope disclosed by the present application, which should be included within the protection scope of the present application. Therefore, the protection scope of the present application should be subject to the protection scope of the claims.

## Claims

1. A method for link switching, **characterized by** comprising:
establishing (S110), by a first communication device, a second link between the first communication device and a second communication device in a case that service transmission cannot be performed by using a first link between the first communication device and the second communication device; and
performing (S120), by the first communication device, the service transmission by using the second link,
wherein communication devices on the first link and communication devices on the second link are different; wherein the first communication device is a terminal device and the second communication device is a network device, the first link is a relay link and the communication devices on the first link comprise the first communication device, the second communication device and a relay device, and the second link is a second access link and the communication devices on the second link comprise the first communication device and the second communication device; wherein the method further comprises:
notifying, by the first communication device, the network device to delete the relay link in a case that the first communication device performs the service transmission by using the second link; wherein establishing (S110), by a first communication device, a second link between the first communication device and a second communication device in a case that service transmission cannot be performed by using a first link between the first communication device and the second communication device comprises:
sending, by the first communication device, a Non-Access Stratum, NAS, message to a Core Network, CN, wherein the NAS message comprises a service request or a Protocol Data Unit, PDU, session establishment request.

2. The method of claim 1, further comprising:
receiving, by the first communication device, third indication information sent by the relay device, wherein the third indication information is used for indicating that the service transmission cannot be performed by the relay link.

3. A communication device (200), which is a first communication device, wherein the communication device comprises:
a processing unit (210), configured to establish a second link between a first communication device and a second communication device, in a case that service transmission cannot be performed by using a first link between the first communication device and the second communication device; and
a transceiving unit (220), configured to perform the service transmission by using the second link,
wherein communication devices on the first link and communication devices on the second link are different; wherein the first communication device is a terminal device and the second communication device is a network device, the first link is a relay link and the communication devices on the first link comprise the first communication device, the second communication device and a relay device, and the second link is a second access link and the communication devices on the second link comprise the first communication device and the second communication device; wherein the processing unit (210) is further configured to:
notify the network device to delete the relay link in a case that the first communication device performs the service transmission by using the second link; wherein the processing unit is further configured to:
send a Non-Access Stratum, NAS, message to a Core Network, CN, wherein the NAS message comprises a service request or a Protocol Data Unit, PDU, session establishment request.

4. The communication device of claim 3, wherein the transceiving unit (220) is further configured to:
receive third indication information sent by the relay device, wherein the third indication information is used for indicating that the service transmission cannot be performed by the relay link.

5. A communication device, comprising: a processor and a memory, wherein the memory is configured to store a computer program, and the processor is configured to call and run the computer program stored in the memory to perform the method of any one of claims 1 to 2.

## Patentansprüche

1. Verfahren zur Verbindungsumschaltung, **dadurch gekennzeichnet, dass** es folgende Vorgänge umfasst:
Aufbauen (S110), durch eine erste Kommunikationsvorrichtung, einer zweiten Verbindung zwischen der ersten Kommunikationsvorrichtung und einer zweiten Kommunikationsvorrichtung in einem Fall, in dem Dienstübertragung nicht unter Verwendung einer ersten Verbindung zwischen der ersten Kommunikationsvorrichtung und der zweiten Kommunikationsvorrichtung durchgeführt werden kann; und
Durchführen (S120), durch die erste Kommunikationsvorrichtung, der Dienstübertragung unter Verwendung der zweiten Verbindung,
wobei Kommunikationsvorrichtungen auf der ersten Verbindung und Kommunikationsvorrichtungen auf der zweiten Verbindung unterschiedlich sind; wobei die erste Kommunikationsvorrichtung ein Endgerät ist und die zweite Kommunikationsvorrichtung eine Netzvorrichtung ist, die erste Verbindung eine Relaisverbindung ist und die Kommunikationsvorrichtungen auf der ersten Verbindung die erste Kommunikationsvorrichtung, die zweite Kommunikationsvorrichtung und eine Relaisvorrichtung umfassen, und die zweite Verbindung eine zweite Zugangsverbindung ist und die Kommunikationsvorrichtungen auf der zweiten Verbindung die erste Kommunikationsvorrichtung und die zweite Kommunikationsvorrichtung umfassen; wobei das Verfahren ferner umfasst:
Benachrichtigen, durch die erste Kommunikationsvorrichtung, der Netzvorrichtung zum Löschen der Relaisverbindung in einem Fall, dass die erste Kommunikationsvorrichtung die Dienstübertragung unter Verwendung der zweiten Verbindung durchführt; wobei das Aufbauen (S110), durch eine erste Kommunikationsvorrichtung, einer zweiten Verbindung zwischen der ersten Kommunikationsvorrichtung und einer zweiten Kommunikationsvorrichtung in einem Fall, dass Dienstübertragung nicht unter Verwendung einer ersten Verbindung zwischen der ersten Kommunikationsvorrichtung und der zweiten Kommunikationsvorrichtung durchgeführt werden kann, umfasst:
Senden, durch die erste Kommunikationsvorrichtung, einer "Non-Access Stratum"-, NAS-, Meldung an ein "Core Network", CN, wobei die NAS-Nachricht eine Dienstanforderung oder eine "Protocol Data Unit"-, PDU-, Sitzungsaufbauanforderung umfasst.

2. Verfahren nach Anspruch 1, ferner umfassend:
Empfangen, durch die erste Kommunikationsvorrichtung, von dritten Anzeigeinformationen, die durch die Relaisvorrichtung gesendet werden, wobei die dritten Anzeigeinformationen verwendet werden, um anzuzeigen, dass die Dienstübertragung nicht durch die Relaisverbindung durchgeführt werden kann.

3. Kommunikationsvorrichtung (200), bei der es sich um eine erste Kommunikationsvorrichtung handelt, wobei die Kommunikationsvorrichtung umfasst:
eine Verarbeitungseinheit (210), die dafür ausgelegt ist, eine zweite Verbindung zwischen einer ersten Kommunikationsvorrichtung und einer zweiten Kommunikationsvorrichtung in einem Fall aufzubauen, in dem Dienstübertragung nicht unter Verwendung einer ersten Verbindung zwischen der ersten Kommunikationsvorrichtung und der zweiten Kommunikationsvorrichtung durchgeführt werden kann; und
eine Sende-Empfangseinheit (220), die dafür ausgelegt ist, die Dienstübertragung unter Verwendung der zweiten Verbindung durchzuführen,
wobei Kommunikationsvorrichtungen auf der ersten Verbindung und Kommunikationsvorrichtungen auf der zweiten Verbindung unterschiedlich sind; wobei die erste Kommunikationsvorrichtung ein Endgerät ist und die zweite Kommunikationsvorrichtung eine Netzvorrichtung ist, die erste Verbindung eine Relaisverbindung ist und die Kommunikationsvorrichtungen auf der ersten Verbindung die erste Kommunikationsvorrichtung, die zweite Kommunikationsvorrichtung und eine Relaisvorrichtung umfassen, und die zweite Verbindung eine zweite Zugangsverbindung ist und die Kommunikationsvorrichtungen auf der zweiten Verbindung die erste Kommunikationsvorrichtung und die zweite Kommunikationsvorrichtung umfassen; wobei die Verarbeitungseinheit (210) ferner für folgenden Vorgang ausgelegt ist:
Benachrichtigen der Netzvorrichtung zum Löschen der Relaisverbindung in einem Fall, dass die erste Kommunikationsvorrichtung die Dienstübertragung unter Verwendung der zweiten Verbindung durchführt; wobei die Verarbeitungseinheit ferner für folgenden Vorgang ausgelegt ist:
Senden einer "Non-Access Stratum"-, NAS-, Meldung an ein "Core Network", CN, wobei die NAS-Nachricht eine Dienstanforderung oder eine "Protocol Data Unit"-, PDU-, Sitzungsaufbauanforderung umfasst.

4. Kommunikationsvorrichtung nach Anspruch 3, wobei die Sende-Empfangseinheit (220) ferner für folgenden Vorgang ausgelegt ist:
Empfangen von dritten Anzeigeinformationen, die durch die Relaisvorrichtung gesendet werden, wobei die dritten Anzeigeinformationen verwendet werden, um anzuzeigen, dass die Dienstübertragung nicht durch die Relaisverbindung durchgeführt werden kann.

5. Kommunikationsvorrichtung, umfassend: einen Prozessor und einen Speicher, wobei der Speicher dafür ausgelegt ist, ein Computerprogramm zu speichern, und der Prozessor dafür ausgelegt ist, das im Speicher gespeicherte Computerprogramm zum Durchführen des Verfahrens nach einem der Ansprüche 1 bis 2 aufzurufen und auszuführen.

## Revendications

1. Procédé de commutation de liaison, **caractérisé en ce qu'**il comprend en outre les étapes consistant à :
établir (S110), par un premier dispositif de communication, une seconde liaison entre le premier dispositif de communication et un second dispositif de communication dans un cas où une émission de service ne peut pas être réalisée au moyen d'une première liaison entre le premier dispositif de communication et le second dispositif de communication ; et
réaliser (S120), par le premier dispositif de communication, l'émission de service au moyen de la seconde liaison,
les dispositifs de communication sur la première liaison et les dispositifs de communication sur la seconde liaison étant différents ; le premier dispositif de communication étant un dispositif terminal et le second dispositif de communication étant un dispositif de réseau, la première liaison étant une liaison relais et les dispositifs de communication sur la première liaison comprenant le premier dispositif de communication, le second dispositif de communication et un dispositif relais, et la seconde liaison étant une seconde liaison d'accès et les dispositifs de communication sur la seconde liaison comprenant le premier dispositif de communication et le second dispositif de communication ; le procédé comprenant en outre l'étape consistant à :
notifier, par le premier dispositif de communication, au dispositif de réseau de supprimer la liaison relais dans un cas où le premier dispositif de communication réalise l'émission de service au moyen de la seconde liaison ; l'établissement (S110), par un premier dispositif de communication, d'une seconde liaison entre le premier dispositif de communication et un second dispositif de communication dans un cas où une émission de service ne peut pas être réalisée au moyen d'une première liaison entre le premier dispositif de communication et le second dispositif de communication comprenant l'étape consistant à :
envoyer, par le premier dispositif de communication, un message de strate de non-accès (NAS) à un réseau central (CN), le message NAS comprenant une demande de service ou une demande d'établissement de session par unité de données de protocole (PDU).

2. Procédé selon la revendication 1, comprenant en outre l'étape consistant à :
recevoir, par le premier dispositif de communication, des troisièmes informations d'indication envoyées par le dispositif relais, les troisièmes informations d'indication étant utilisées pour indiquer que l'émission de service ne peut pas être réalisée par la liaison relais.

3. Dispositif de communication (200), qui est un premier dispositif de communication, le dispositif de communication comprenant :
unité de traitement (210), configurée pour établir une seconde liaison entre un premier dispositif de communication et un second dispositif de communication, dans un cas où une émission de service ne peut pas être réalisée au moyen d'une première liaison entre le premier dispositif de communication et le second dispositif de communication ; et
une unité d'émission-réception (220), configurée pour réaliser l'émission de service au moyen de la seconde liaison,
les dispositifs de communication sur la première liaison et les dispositifs de communication sur la seconde liaison étant différents ; le premier dispositif de communication étant un dispositif terminal et le second dispositif de communication étant un dispositif de réseau, la première liaison étant une liaison relais et les dispositifs de communication sur la première liaison comprenant le premier dispositif de communication, le second dispositif de communication et un dispositif relais, et la seconde liaison étant une seconde liaison d'accès et les dispositifs de communication sur la seconde liaison comprenant le premier dispositif de communication et le second dispositif de communication ; l'unité de traitement (210) étant en outre configurée pour :
notifier au dispositif de réseau de supprimer la liaison relais dans un cas où le premier dispositif de communication réalise l'émission de service au moyen de la seconde liaison ; l'unité de traitement étant en outre configurée pour :
envoyer un message de strate de non-accès (NAS) à un réseau central (CN), le message NAS comprenant une demande de service ou une demande d'établissement de session par unité de données de protocole (PDU).

4. Dispositif de communication selon la revendication 3, dans lequel l'unité d'émission-réception (220) est en outre configurée pour :
recevoir des troisièmes informations d'indication envoyées par le dispositif relais, les troisièmes informations d'indication étant utilisées pour indiquer que l'émission de service ne peut pas être réalisée par la liaison relais.

5. Dispositif de communication, comprenant : un processeur et une mémoire, la mémoire étant configurée pour stocker un programme informatique et le processeur étant configuré pour appeler et exécuter le programme informatique stocké dans la mémoire afin de réaliser le procédé selon l'une quelconque des revendications 1 et 2.
